# DEMANDE DE BREVET EUROPEEN

(11) **EP 1 967 417 A1**
(43) Date de publication de la demande: **10.09.2008**
(21) Numéro de dépôt: 08102317.8
(22) Date de dépôt: 05.03.2008
(51) Int. Cl.: B60R 5/04

(54) **Coffre notamment pour véhicule automobile.**

(30) Priorité: 07.03.2007 FR 0753688
(71) Demandeur: PEUGEOT CITROËN AUTOMOBILES S.A., 78140 Vélizy Villacoublay (FR)
(72) Inventeur: Le Dall, Christophe, 92150, SURESNES (FR); Duvivier, Arnaud, 91120, PALAISEAU (FR); Sassi, Franck, 06190, ROQUEBRUNE CAP MARTIN (FR); Morando, Patrick, 06100, NICE (FR)
(74) Mandataire: Jacobson, Claude

(57) **Abrégé**

L'invention concerne un coffre (16) comprenant une tablette de fractionnement (22), au moins une garniture latérale (32) comportant un moyen de fixation destiné à recevoir une attache (68) de ladite tablette afin de la suspendre, caractérisé en ce que le moyen de fixation est mobile entre une position utile et une position escamotée.

L'invention concerne également un véhicule automobile comportant un tel coffre.

## Description

La présente invention concerne un coffre.

Il est connu de l'état de la technique de concevoir un coffre de véhicule automobile du type comprenant :
- des premier et second panneaux de structure latéraux, délimitant latéralement un coffre du véhicule, et
- une première pièce de garniture qui comprend une première cloison rapportée sur le premier panneau de structure.

Dans ce type de véhicule, les supports de tablette de coffre sont constitués par des pistes horizontales, s'étendant latéralement. La tablette est ainsi posée à droite et à gauche sur l'une de ces pistes.

Ainsi, lorsque la tablette est retirée par exemple pour disposer dans le coffre des sièges supplémentaires, comme le permettent les véhicules modernes dits modulaires, les pistes restent visibles, ce qui nuit à l'esthétique du véhicule.

En outre, il a été remarqué que les utilisateurs de véhicules appréciaient que l'espace intérieur fournisse de nombreux rangements. Il a enfin été remarqué que les concepteurs de tablette sont gênés pour ajuster les dimensions de la tablette indépendamment des dimensions du coffre.

Ainsi, l'invention a pour but de fournir un coffre comprenant des supports de tablette ne nuisant pas à l'esthétique du véhicule lorsque la tablette est retirée et offrant plus de modularités et de rangements.

A cet effet, l'invention a pour objet un coffre comprenant une tablette de fractionnement, au moins une garniture latérale comportant un moyen de fixation destiné à recevoir une attache de ladite tablette afin de la suspendre, caractérisé en ce que le moyen de fixation est mobile entre une position utile et une position escamotée.

Selon d'autres caractéristiques de l'invention, le moyen de fixation est solidaire d'une pièce montée pivotante entre une position utile et une position escamotée par rapport à ladite au moins une garniture latérale.

La pièce pivotante est montée de manière bistable, entre la position utile et la position escamotée, à l'aide de moyens élastiques sur ladite au moins une garniture.

La pièce pivotante est sensiblement en forme de gouttière afin d'offrir un rangement escamotable.

La face avant de ladite gouttière comporte le moyen de fixation.

La face arrière de ladite gouttière comporte une butée afin d'empêcher le débattement de la pièce pivotante au delà de la position utile.

La pièce pivotante comporte un couvercle et des moyens pour empêcher son ouverture lorsque la pièce pivotante est escamotée.

Le moyen de fixation comporte une rainure sensiblement rectiligne dont la concavité est apte à recevoir ladite attache de la tablette.

La rainure comporte au moins un réducteur de sa concavité afin d'améliorer la stabilité de l'interface entre ladite rainure et ladite attache de tablette.

Le coffre comprend deux garnitures latérales en vis à vis, chaque garniture comportant une pièce montée pivotante entre une position utile et une position escamotée par rapport à ladite au moins une garniture latérale, chaque pièce étant solidaire d'un moyen de fixation respectif destiné à recevoir une attache de ladite tablette afin de la suspendre entre les deux garnitures latérales, les deux pièces étant symétriques par rapport au plan vertical médian à la longueur dudit coffre.

L'invention a également pour objet un véhicule automobile comprenant un coffre selon l'une des caractéristiques mentionnées ci-dessus.

L'invention sera mieux comprise à l'aide de la description qui va suivre, donnée uniquement à titre d'exemple et faite en se référant aux dessins annexés parmi lesquels :
- la figure 1 est une vue en perspective de la partie arrière d'un habitacle de véhicule automobile de type modulaire,
- la figure 2 est une vue en perspective éclatée d'une pièce de garniture rapportée dans le véhicule représenté sur la figure 1,
- les figures 3 à 5 sont des vues en coupe transversale de la pièce de garniture de la figure 2, dans trois positions de fonctionnement différentes.

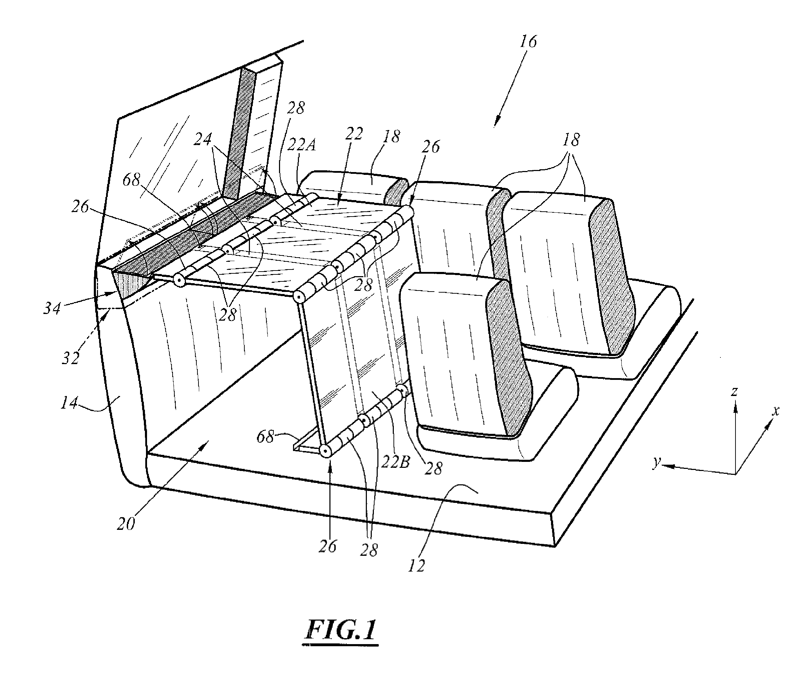

En référence à la figure 1, la partie arrière d'un habitacle de véhicule automobile comprend un plancher arrière 12 et des panneaux de structure latéraux 14 droit et gauche (seul le panneau de gauche est visible sur la figure). Le plancher arrière 12 et les panneaux de structure latéraux 14 délimitent un coffre arrière 16 du véhicule.

Le véhicule comprend en outre des sièges arrière 18 fixés sur le plancher 12, dans le coffre 16. Ces sièges arrière 18 sont amovibles, afin de favoriser soit le nombre de personnes pouvant prendre place dans le véhicule, soit un volume de stockage 20 (le volume du coffre arrière 16 non occupé par les sièges arrière 18).

Dans l'exemple illustré, le coffre arrière 16 comprend des moyens d'attache (non représentés) pour deux rangées de trois sièges chacune. Ainsi, il est possible de monter jusqu'à six sièges 18 : le volume de stockage 20 dans le coffre arrière 16 est alors minimal. Au contraire, il est possible de ne monter aucun siège : le volume de stockage 20 dans le coffre arrière 16 est alors à son maximum.

Le fractionnement du coffre arrière 16 entre volume de stockage 20 et sièges arrière 18 est longitudinal suivant que les sièges arrières 18 d'une ou deux rangées sont montés, et/ou transversal si un ou plusieurs sièges d'une rangée ne sont pas montés.

Dans l'exemple illustré sur la figure 1, la première rangée de sièges arrière 18 (la plus avancée) est complète, tandis que la seconde rangée comprend un seul siège 18 disposé sur la droite du coffre arrière 16. Ainsi, le volume de stockage 20 est constitué par la partie arrière gauche du coffre 16.

Afin de cacher cet espace de stockage 20, à la fois depuis l'extérieur du véhicule mais également pour les passagers du véhicule, le véhicule comprend une tablette amovible de coffre 22 destinée à couvrir l'espace de stockage 20 en fournissant une paroi horizontale 22A sensiblement parallèle au plancher arrière 12, ainsi que, le cas échéant, si un fractionnement transversal du coffre arrière 16 est réalisé, une paroi verticale 22B, sensiblement parallèle aux panneaux de structure 14.

La tablette 22 a une forme générale rectangulaire. La tablette 22 est divisée par des articulations parallèles longitudinales 24 et transversales 26. Dans l'exemple illustré, la tablette 22 comporte deux articulations longitudinales 24 espacées de manière égale dans la largeur de la tablette 22, de manière à diviser la tablette 22 en trois parties égales, ainsi que trois articulations transversales 26 divisant la tablette 22 en deux bandes centrales, et deux bandes d'extrémités, plus étroites que les bandes centrales, par exemple cinq fois moins étroites. Les expressions « longitudinales » et « transversales » des articulations s'entendent par rapport à la tablette 22.

Les articulations longitudinales 24 sont constituées par un amincissement de matière de la tablette 22, créant des zones de faiblesse aptes à se déformer élastiquement.

Cela implique que chaque articulation transversale 26 est formée de trois charnières 28 alignées mais non jointives. De manière générale, il faut un nombre de charnières 28 correspondant au nombre de parties formées par les articulations longitudinales 24.

De manière générale également, chaque articulation transversale 26 est interrompue par chaque articulation longitudinale 24 pour autoriser les mouvements indépendants des parties d'articulations les unes par rapport aux autres.

Les bandes d'extrémités comportent des rebords latéraux opposés recourbés 68 (détaillés par la suite) pour fixer à droite et/ou à gauche la tablette aux panneaux latéraux 14.

On comprend que pour appliquer le type de tablette 22, il est difficile vis-à-vis des dimensions du volume de stockage 20 de facilement l'intégrer à n'importe quel coffre 16. En effet, dans la configuration de la figure 1, on souhaite que la paroi verticale 22B soit sensiblement contenue dans le plan vertical ZX médian à la largeur Y du véhicule et que la paroi horizontale 22A (totale ou partielle) soit toujours à la même hauteur dans le coffre 16. Cela implique que les panneaux de structure latéraux 14 aient des dimensions définies par rapport aux dimensions de la tablette 22 ou inversement. Il est particulièrement difficile par exemple d'appliquer une tablette 22 dans le cas d'un coffre 16 de monospace qui comporte une grande largeur.

Afin de remédier à ce problème récurant, une pièce de garniture intérieure 32 est rapportée sur chaque panneau de structure 14. La pièce de garniture 32 comporte une gouttière escamotable 34. Ce dispositif permet avantageusement de pouvoir compenser la différence de longueur de la tablette 22 par rapport à la distance entre chaque panneaux de structure 14 c'est-à-dire de ne pas à avoir adapter les dimensions de l'un par rapport à l'autre.

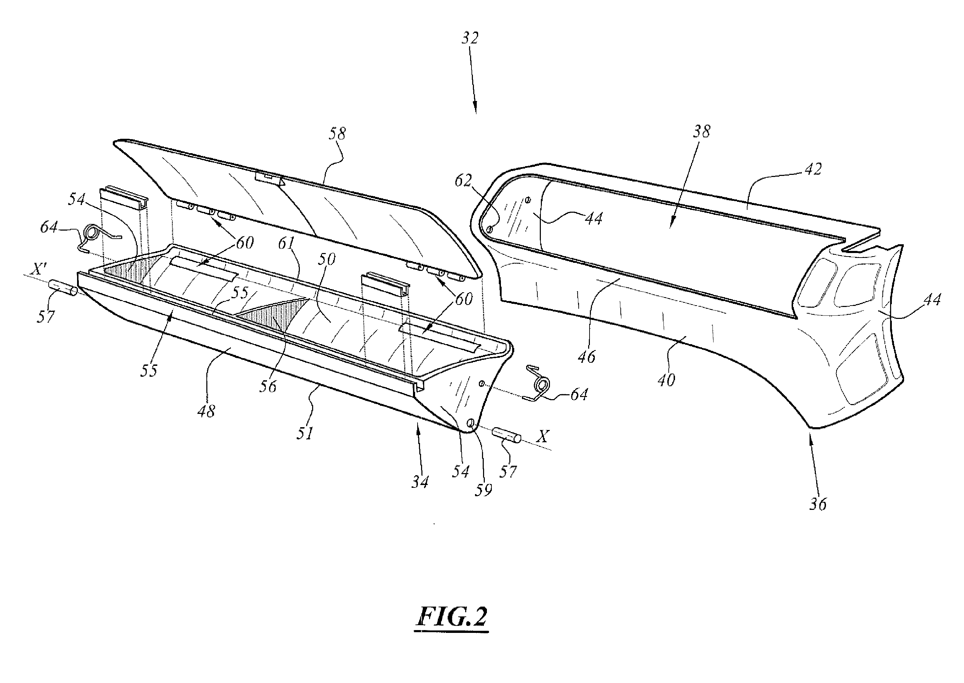

En référence à la figure 2, la pièce de garniture 32 comprend tout d'abord une cloison 36 délimitant une ouverture 38 d'insertion de la gouttière 34.

La cloison 36 comprend une face avant 40 (destinée à être orientée vers le coffre 16 du véhicule), une face supérieure 42 et deux faces de côté 44, l'ensemble conférant à la cloison 36 une forme générale en caisson. L'ouverture 38 est ménagée dans la face avant 40, et s'étend jusqu'à la face supérieure 42. La face avant 40 comprend une avancée en biais 46 (dirigée vers le coffre 16 du véhicule) bordant par le dessous l'ouverture 38 sur sensiblement tout son long.

La gouttière 34 comprend deux parois rectangulaires longitudinales 48, 50 fixées en V par leur grand côté inférieur 51. L'angle entre les deux parois rectangulaires 48, 50 est par exemple de l'ordre de 90°. L'espace entre ces parois constitue un espace de rangement 52 (non référencé).

L'espace de rangement 52 est fermé, à chaque extrémité des parois rectangulaires 48, 50, par des parois d'extrémités triangulaires 54.

Une cloison triangulaire de fractionnement 56, disposée à mi-chemin entre les parois d'extrémité 54, divise en deux l'espace de rangement 52.

Une 48 des parois longitudinales est destinée à être disposée vers le coffre 16 du véhicule. Elle est appelée paroi avant. L'autre paroi longitudinale 50 est destinée à être disposée dans la cloison 36 associée du véhicule. Elle est appelée paroi arrière.

La paroi avant 48 est munie d'un côté supérieur 53 (non référencé), opposé au côté inférieur 51, comprenant une rainure longitudinale 55 s'étendant sur toute la longueur de la gouttière 34. La rainure 55 s'ouvre vers le haut, c'est-à-dire, à l'opposé du côté inférieur 51.

Un doigt de pivotement 57 est fixé à chaque paroi d'extrémité 54. Chaque doigt de pivotement 57 est fixé par insertion à force dans un orifice 59 prévu à cet effet dans la paroi d'extrémité respective 54. Les deux doigts de pivotement 57 définissent ensemble un axe longitudinal X-X' autour duquel la gouttière 34 est destinée à pivoter. L'axe de pivotement X-X' est orienté parallèlement et à l'aplomb du côté inférieur 51.

De préférence, cet axe de pivotement X-X', et donc les doigts de pivotement 57 le définissant, est placé à proximité du côté inférieur 51, par exemple à un centimètre ou moins.

La gouttière 34 comprend en outre un couvercle 58 fixé par des charnières 60 sur le côté supérieur 61 de la paroi arrière 50, opposé au côté inférieur 51. Ce couvercle 58 s'étend en position fermée depuis le côté supérieur 61 de la face arrière 50 jusqu'à la rainure 55 de la paroi avant 48, sans néanmoins recouvrir cette dernière. Le côté supérieur 61 de la paroi arrière 50 s'élève au-dessus du couvercle 58 (en position fermée) de manière à former une butée d'arrêt comme cela sera expliqué par la suite.

Un ressort de torsion 64 en épingle à cheveux est fixé, de chaque côté de la gouttière 34, entre une paroi d'extrémité 54 de la gouttière et une paroi d'extrémité de la cloison 36. Le ressort 64 est fixé de sorte que le déplacement de la gouttière 34 autour de l'axe de pivotement XX' entraîne l'enroulement ou le déroulement du ressort 64.

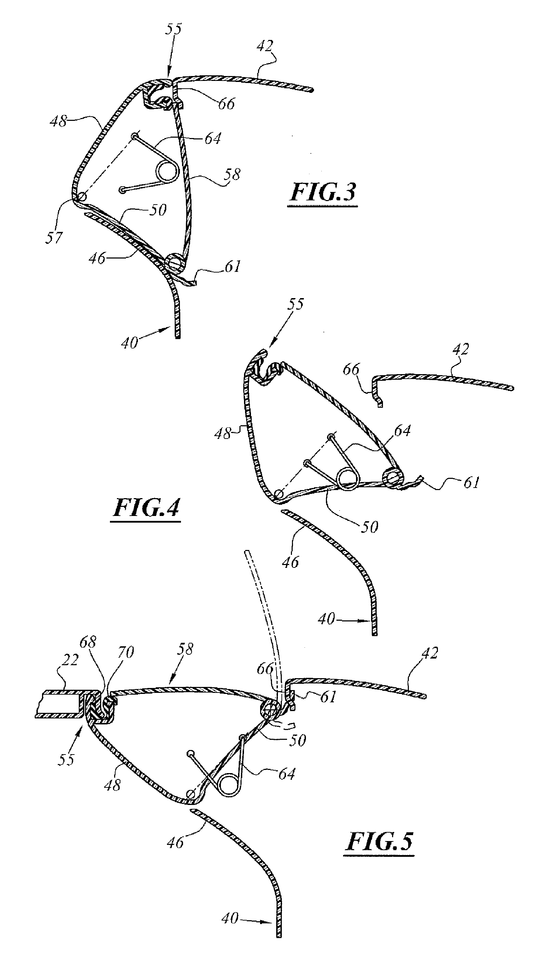

En référence à la figure 3, la gouttière 34 est disposée dans son logement 38 dans une position escamotée. Dans cette position, l'espace de rangement 52 (non référencé) n'est pas accessible depuis l'intérieur du véhicule.

La face arrière 50 de la gouttière repose sur l'avancée en biais 46 de la cloison 36, tandis que la rainure 55 de la paroi avant 48 est appuyée contre la tranche 66 de la face supérieure 42 de la cloison 36, formée par un recourbement de cette face supérieure dans l'ouverture 38.

Le couvercle 58 s'étend pratiquement à la verticale. L'extrémité libre du couvercle, c'est-à-dire l'extrémité opposée aux charnières 60, est intercalée entre le bord intérieur de la rainure 55 et la tranche 66 de la face supérieure 42, ces deux derniers éléments formant des moyens empêchant l'ouverture intempestive du couvercle 58 lorsque la gouttière est en position escamotée, et empêchant donc le déversement d'objets disposés dans l'espace de rangement 52 (non référencé).

Les ressorts 64 sollicitent la gouttière 34 vers cette position escamotée.

La figure 4 montre le basculement vers l'avant de la gouttière, autour de l'axe longitudinal X-X' des doigts 57. Dans cette position intermédiaire, les ressorts 64 sont en équilibre instable : leur compression en enroulement est maximale. Ceci est obtenu par le fait que les points d'attache de chaque ressort 64 sont à une distance minimale l'un de l'autre.

En référence à la figure 5, la gouttière 34 est en position basculée vers l'avant de la pièce de garniture 32. Dans cette position les deux parois 48 et 50 s'étendent à environ 45° de l'horizontale, tandis que le couvercle 58 s'étend sensiblement horizontalement, lorsqu'il est en position fermée. Dans cette position basculée, la butée d'arrêt 61 de la gouttière 34 est en contact avec le recourbement 66. La butée 61 empêche un pivotement de la gouttière vers l'avant au-delà de la position basculée. Les ressorts 64 sont alors partiellement détendus et sollicitent la gouttière vers cette position.

Egalement visible sur la figure 5, la tablette de coffre 22 comporte une attache sous la forme d'un bord latéral recourbé 68, sur une de ses bandes d'extrémité. Afin de maintenir la tablette de coffre 22 en position, la rainure 55 de la gouttière 34 reçoit son rebord recourbé 68, lorsque cette dernière est montée horizontale dans le coffre 16. Préférentiellement, Deux pièces 70, formant réducteurs de la concavité de la rainure 55 respective, (ajouter les deux références 70 sur la figure 2) sont insérées dans la rainure 55 afin d'améliorer la stabilité de l'interface entre ladite rainure et le rebord 68, c'est-à-dire éviter les déplacements relatifs lors des accélérations dans différentes directions du véhicule.

La rainure 55 forme ainsi un moyen de fixation de l'attache 68 de la tablette 22.

Il est à noter que puisque le couvercle 58 ne recouvre pas la rainure 55, il est possible d'une part de l'ouvrir même lorsque la tablette 22 est en place, et d'autre part de monter/démonter la tablette de coffre 22 quelle que soit sa position. A cet égard, on a illustré en trait mixte sur la figure 5 le couvercle 58 en position relevée.

Bien évidemment, une seconde pièce de garniture analogue à la pièce 32 visible à la figure 1 est montée sur le panneau de structure 14 à droite. Notamment, cette seconde pièce de garniture est sensiblement symétrique au plan vertical (ZX) médian à la largeur (Y) du véhicule.

La tablette 22 est dimensionnée de manière à pouvoir reposer à l'horizontale, du côté du premier panneau, sur la première gouttière en position basculée avec le premier rebord latéral de la tablette reçu dans la rainure de la première gouttière et, du côté du second panneau, sur la seconde gouttière en position basculée avec le second rebord latéral de la tablette reçu dans la rainure de la seconde gouttière.

## Revendications

1. Coffre (16) comprenant une tablette de fractionnement (22), au moins une garniture latérale (32) comportant un moyen de fixation (55) destiné à recevoir une attache (68) de ladite tablette afin de la suspendre, **caractérisé en ce que** le moyen de fixation (55) est mobile entre une position utile et une position escamotée.

2. Coffre (16) selon la revendication 1, **caractérisé en ce que** le moyen de fixation (55) est solidaire d'une pièce (34) montée pivotante entre une position utile et une position escamotée par rapport à ladite au moins une garniture latérale.

3. Coffre (16) selon la revendication 2, **caractérisé en ce que** la pièce pivotante (34) est montée de manière bistable, entre la position utile et la position escamotée, à l'aide de moyens élastiques (64) sur ladite au moins une garniture.

4. Coffre (16) selon la revendication 2 ou 3, **caractérisé en ce que** la pièce pivotante (34) est sensiblement en forme de gouttière (48, 50) afin d'offrir un rangement (52) escamotable.

5. Coffre (16) selon la revendication 4, **caractérisé en ce que** la face avant (48) de ladite gouttière comporte le moyen de fixation (55).

6. Coffre (16) selon la revendication 4 ou 5, **caractérisé en ce que** la face arrière de ladite gouttière comporte une butée (61) afin d'empêcher le débattement de la pièce pivotante (34) au delà de la position utile.

7. Coffre (16) selon l'une des revendications 4 à 6, **caractérisé en ce que** la pièce pivotante (34) comporte un couvercle (58) et des moyens (55, 66) pour empêcher son ouverture lorsque la pièce pivotante (34) est escamotée.

8. Coffre (16) selon l'une des revendications précédentes, **caractérisé en ce que** le moyen de fixation (55) comporte une rainure sensiblement rectiligne dont la concavité est apte à recevoir ladite attache (68) de la tablette (22).

9. Coffre (16) selon la revendication 8, **caractérisé en ce que** la rainure (55) comporte au moins un réducteur (70) de sa concavité afin d'améliorer la stabilité de l'interface entre ladite rainure et ladite attache de tablette (22).

10. Coffre (16) selon l'une des revendications précédentes, **caractérisé en ce qu'**il comprend deux garnitures latérales (32) en vis à vis, chaque garniture comportant une pièce montée pivotante entre une position utile et une position escamotée par rapport à ladite au moins une garniture latérale, chaque pièce étant solidaire d'un moyen de fixation respectif destiné à recevoir une attache de ladite tablette afin de la suspendre entre les deux garnitures latérales, les deux pièces étant symétriques par rapport au plan vertical (ZX) médian à la longueur (Y) dudit coffre.

11. Véhicule automobile, **caractérisé en ce qu'**il comprend un coffre (16) conforme à l'une des revendications précédentes.
